# EUROPÄISCHE PATENTSCHRIFT

(11) **EP 2 907 614 B1**
(45) Veröffentlichungstag und Bekanntmachung des Hinweises auf die Patenterteilung: **18.09.2019**
(21) Anmeldenummer: 14405015.0
(22) Anmeldetag: 17.02.2014
(51) Int. Cl.: B23K 26/38, B23K 26/40, G04D 3/00, G04B 13/02

(54) **Verfahren zur Herstellung von Werkstücken aus einer Materialplatte**
Method for producing workpieces from a material panel
Procédé de fabrication de pièces usinées à partir d'une plaque de matériau

(43) Veröffentlichungstag der Anmeldung: 19.08.2015
(73) Patentinhaber: Blösch AG, 2540 Grenchen (CH)
(72) Erfinder: Blösch, Peter, 2502 Biel (CH); Dumitru, Gabriel, 5415 Nussbaumen b. Baden (CH)
(74) Vertreter: Keller & Partner Patentanwälte AG

(56) Entgegenhaltungen:
- EP-A1- 2 263 824
- EP-A1- 2 263 825
- EP-A1- 2 471 627

## Beschreibung

### Technisches Gebiet

Die Erfindung betrifft ein Verfahren zur Herstellung von Werkstücken aus einer Materialplatte.

### Stand der Technik

Auf vielen Gebieten der Industrie, so zum Beispiel in der Uhrenindustrie oder Automobilindustrie, werden im Wesentlichen 2-dimensionale Werkstücke aus Materialplatten gefertigt. Für Loszahlen von circa 500 bis 10'000 Stück wird immer häufiger auch ein Laser zum Ausschneiden der Werkstücke aus den Materialplatten eingesetzt. Nach dem Ausschneiden der Werkstücke erfolgen dann weitere Verarbeitungsschritte, wie zum Beispiel das Aufbringen einer oder mehrerer Beschichtungen.

In der Regel wird für das Ausschneiden der Werkstücke die Materialplatte derart gehalten, dass die Werkstücke entfernt werden und ein Rahmen auf einem Träger oder einer Halterung einer Schneideanlage zurückbleibt.

So beschreibt die US 2007/0287266 A1 (National Cheng Kung University) eine Anlage und ein Verfahren zum Schneiden von Silizium-Wafern mit einem CO₂ Laser. Dabei wird der Silizium-Wafer auf einem mit Glas oder Metall beschichteten Substrat befestigt. Zur Befestigung kann sowohl eine Halterung als auch ein Leim eingesetzt werden. Der Silizium-Wafer zusammen mit dem Substrat wird wiederum auf einer Haltevorrichtung der Anlage montiert. Mittels eines Umlenkspiegels und einer Fokussierlinse ist es möglich, beliebige Formen aus dem Silizium-Wafer auszuschneiden.

Die EP 1 800 792 A1 (Jenoptik Automatisierungstechnik GmbH) beschreibt ein Verfahren sowie eine Vorrichtung zum Schneiden von Wafern aus sprödem Material mittels eines Lasers. Das Schneiden erfolgt mittels thermisch induzierter Spannung durch den Laser, wobei zusätzlich der Wafer, zumindest partiell entlang der Trennlinien, gekühlt wird. Dazu ist im Werkstückhalter eine Kühlung der Auflagefläche für den Wafer vorhanden. Mit Vorteil wird der Wafer auf eine Stretchfolie aufgeklebt, welche dann den Kontakt zur Auflagefläche herstellt. Dabei dient die Stretchfolie auch dazu, den Wafer für das anschliessende Separieren der einzelnen Chips in Position zu halten. Die Fixierung der Stretchfolie zusammen mit dem Wafer auf der Auflagefläche erfolgt durch Ansaugen der Stretchfolie auf die Auflagefläche. Alternativ kann die Stretchfolie auch auf der Auflagefläche angefroren werden.

Üblicherweise werden die ausgeschnittenen Werkstücke gesammelt und müssen dann für die Weiterverarbeitung erneut auf einem Träger oder in einer Halterung positioniert und befestigt werden. Das erneute Positionieren und Befestigen der Werkstücke auf einem Träger erfordert zusätzliche Zeit. Es wird eine entsprechende zusätzliche Anlage benötigt, die das Positionieren und Befestigen ausführt. Diese erhöht die Komplexität des Gesamtsystems und beansprucht zusätzlichen Raum. Die längere Herstellungszeit der Werkstücke und die zusätzlichen Anlagekomponenten führen zu erhöhten Herstellungskosten für die zu fertigenden Teile.

In der EP 2 263 824 A1 und der EP 2 263 825 A1 der vorliegenden Anmelderin wurde somit vorgeschlagen, die Materialplatte auf einem Träger zu befestigen, die Werkstücke mit einem Laser aus der Materialplatte auszuschneiden, einen Rahmen vom Träger zu entfernen, die Werkstücke aber für die nachfolgende Bearbeitung auf dem Träger zu belassen. Erst nach erfolgter Weiterverarbeitung werden die Werkstücke vom Träger entfernt. Zur Befestigung der Materialplatte auf dem Träger werden verschiedene Verfahren vorgeschlagen, namentlich die lokale Erwärmung zur Bildung einer Schmelze, das Aufbringen einer Haftschicht, z. B. einer doppelseitigen Klebefolie, und verschiedene Bonding-Verfahren.

Die EP 2 471 627 A1 (Blösch Ressourcen AG) offenbart ein Verfahren zur Herstellung von mechanischen Werkstücken aus einer Platte aus monokristallinem Silizium. Dabei werden die Werkstücke zunächst aus einer Platte mittels eines Laserschneidverfahrens ausgeschnitten. Anschliessend werden die ausgeschnittenen Werkstücke erhitzt und einer Gasatmosphäre ausgesetzt, welche Sauerstoff und/oder Stickstoff enthält, so dass eine Oberfläche des Werkstücks mindestens im Bereich der Schnittfläche oxidiert und/oder nitriert wird. Anschliessend wird die Oberfläche der Werkstücke mindestens im Bereich der Schnittfläche mit einer chemischen Zusammensetzung behandelt, durch welche vorwiegend ein oxidierter bzw. nitrierter Anteil der Oberfläche entfernt wird. Dadurch ergeben sich monokristalline und glatt ausgebildete Schnittflächen, Die Platte kann vor dem Ausschneiden der Werkstücke auf einem Träger befestigt werden, wobei nach dem Ausschneiden ein Rahmen vom Träger entfernt wird und die Werkstücke für das Oxidieren bzw. Nitrieren auf dem Träger verbleiben,

Mit diesen Verfahren lassen sich die Werkstücke bei der Herstellung und Weiterverarbeitung einfacher und effizienter handhaben. Der Befestigungsschritt ist aber bei den erwähnten Verfahren recht komplex und aufwändig zu automatisieren. Das Verfahren als Ganzes ist somit noch immer verhältnismässig kostenintensiv,

### Darstellung der Erfindung

Aufgabe der Erfindung ist es, das aus der EP 2 263 825 A1 bekannte Verfahren derart weiterzuentwickeln, dass der Aufwand reduziert und die Automatisierung vereinfacht werden können,

Die Lösung der Aufgabe ist durch die Merkmale des Anspruchs 1 definiert. Gemäss der Erfindung umfasst das Verfahren zur Herstellung von Werkstücken aus einer Materialplatte folgende Schritte:
a) Befestigen der Materialplatte auf einem Träger;
b) Ausschneiden einzelner Werkstücke aus der Materialplatte mit einem Laser,
c) Weiterverarbeiten der auf dem Träger verbliebenen Werkstücke und
d) Entfernen der Werkstücke vom Träger.

Dabei werden zur Befestigung der Materialplatte auf dem Träger (Schritt a) folgende Teilschritte durchgeführt:
a1) Aufbringen einer Metallisierung auf die Materialplatte, und
a2) galvanische Abscheidung einer den Träger bildenden Trägerschicht auf die Metallisierung.

Eine Anlage zur Herstellung von Werkstücken aus einer Materialplatte, welche derart ausgebildet ist, dass die oben genannten Verfahrensschritte ausgeführt werden können, umfasst insbesondere folgende Komponenten:
a) eine Beschichtungseinheit zum Aufbringen einer Metallisierung auf die Materialplatte;
b) eine Galvanikeinheit zur Abscheidung einer einen Träger bildenden Trägerschicht auf die Metallisierung;
c) eine Schneideinheit zum Ausschneiden einzelner Werkstücke aus der Materialplatte mit einem Laser;
d) eine Bearbeitungseinheit zum Weiterverarbeiten der auf dem Träger verbliebenen Werkstücke, z. B. eine Beschichtungsstation; und
e) eine Handhabungseinheit zum Entfernen der Werkstücke vom Träger.

Indem die Werkstücke nach dem Ausschneiden auf dem Träger verbleiben, bleiben sie gehalten und positioniert. Dies hat den Vorteil, dass der Träger zusammen mit den darauf befestigten Werkstücken als ganzes zur Weiterverarbeitung weitergeleitet werden kann. Zudem ist auch nach dem Ausschneiden die exakte Position der Werkstücke auf dem Träger bekannt, was den Vorteil hat, dass weitere spezifische Bearbeitungen an den Werkstücken direkt nach dem Ausschneiden in Abhängigkeit von der bekannten Position (und Orientierung) der Werkstücke vorgenommen werden können. Dies ermöglicht insgesamt eine effiziente und zeitsparende Handhabung der Werkstücke.

Dadurch verringert sich die gesamte Herstellungszeit der Werkstücke, da die Zeit zur erneuten Positionierung und Befestigung der Werkstücke auf einem Träger oder einer Halterung entfällt. Auch braucht es keine zusätzliche Anlage, die diese Positionierung und Befestigung vornimmt.

Durch Aufbringen der Metallisierung kann eine Materialplatte, welche sich ansonsten nicht oder nur sehr erschwert galvanisch beschichten lässt, für die anschliessende galvanische Abscheidung vorbereitet werden. Die Metallisierung bildet also eine Haftvermittler-Schicht. Der eigentliche Träger wird dann durch die galvanische Abscheidung erzeugt. So kann gleichzeitig effizient ein stabiler Träger hergestellt werden und eine sichere und gleichmässige Befestigung der Materialplatte auf dem Träger erreicht werden. Die Verfahren lassen sich auf einfache Weise automatisieren und auch im grossen Massstab einsetzen.

Das Ausschneiden der Werkstücke erfolgt wie erwähnt mit einem Laser. Dazu wird vorzugsweise ein Schneidelaserstrahl eines gepulsten Lasers verwendet, der Licht bei einer Wellenlänge von 532 nm emittiert. Die Pulsdauer des Lasers ist bevorzugt 5 - 15 ps, die Repetitionsfrequenz der Laserpulse kann beispielsweise zwischen 200 und 1000 kHz variieren und der Durchmesser des Schneidelaserstrahls im Fokus (Spot) beträgt zwischen 10 µm und 30 µm.

Die Werkstücke werden mit Vorteil ausgeschnitten, indem der Laserstrahl Bahnen, die parallel zu allen Konturen der Werkstücke sind, mehrmals abfährt. Dies kann unter atmosphärischer Luft erfolgen. Die Abstände zwischen den Bahnen betragen vorzugsweise zwischen 25 und 75 % des Spotdurchmessers; für eine 0.21 mm dicke Platte soll sich beispielsweise eine minimale Gesamtbreite aller Konturen von 100 µm ergeben.

Grundsätzlich kann sowohl mit Einzelpulsen als auch mit Pulszügen gearbeitet werden, wobei Pulsenergien von 10 bis 80 µJ und Pulsintervalle von 1 bis 5 µs eingesetzt werden. Die Pulszüge sind Reihen von 2 bis 10 Laserpulsen, die 10 bis 50 ns voneinander zeitlich getrennt sind. Die Folgefrequenz der Pulszüge liegt im erwähnten Bereich von 200 - 1'000 kHz.

Beim Abfahren der vordefinierten Bahnen liegen die Vorschubgeschwindigkeiten zwischen 50 und 1'000 mm/s. Die Anzahl Wiederholungen obiger Bahnen hängt von den gewählten Pulsenergien und Vorschubgeschwindigkeiten ab, z.B. 4 bis 7 Wiederholungen für ∼80 µJ und 100 mm/s, 15 bis 20 Wiederholungen für ∼15 µJ und 250 mm/s für die oben erwähnte Platte mit einer Dicke von 0.21 mm.

Der Laserstrahl kann auf die obere oder auf die untere Seite der Materialplatte bzw. auf eine Ebene dazwischen fokussiert werden. Je nach Material und Dicke der Materialplatte kann eine schrittweise Verschiebung des Brennpunktes zwischen aufeinanderfolgenden Durchläufen derselben Bahn von Vorteil sein.

Zwischen dem Ausschneiden der Werkstücke und der weiteren Verarbeitung derselben können weitere Schritte vorgesehen werden, z. B. zum Reinigen der Werkstücke. Auch dazu verbleiben die Werkstücke auf dem Träger, die Haftung zwischen den Werkstücken und dem Träger soll somit ausreichend sein für die mechanischen und chemischen Belastungen, die mit dem Reinigen verbunden sind. Als Reinigungsverfahren geeignet sind beispielsweise ein Ultraschallbad (mit einer Verweildauer von unter 5 Minuten), die Reinigung in einer alkalischen Seife bei Temperaturen von 50-80 °C (mit einer Einwirkungszeit von unter 10 Minuten) sowie die Spülung mit Reinstwasser.

Mit Vorteil besteht die Materialplatte aus einer Nitrid- oder Oxidkeramik (z. B. AIO- oder AIN-Keramik), Saphir, Silizium oder Diamant, z. B. durch CVD hergestellt. Derartige Platten lassen sich üblicherweise nicht galvanisch beschichten, durch die erfindungsgemässe Schaffung der Haftvermittler-schicht wird jedoch die nachfolgende galvanische Abscheidung möglich.

Weitere Materialien sind ebenfalls denkbar, z. B. andere Keramiken, die Materialplatte kann auch mehrschichtig ausgeführt sein.

Bevorzugt wird die Metallisierung mittels physikalischer Gasphasenabscheidung (PVD) auf der Materialplatte erzeugt. Dieses Verfahren ist u. a. zur Erzeugung von dünnen Metallschichten etabliert und lässt sich vollständig automatisiert und bei Bedarf im grossen Massstab durchführen. Das Verfahren schafft eine gute Verbindung zwischen Schicht und Materialplatte und ist umweltfreundlicher als andere Beschichtungsverfahren. Besonders geeignet sind Sputtering oder das thermische Verdampfen.

Mit Vorteil weist die Metallisierung eine Aussenschicht aus Kupfer auf. Als Aussenschicht wird dabei diejenige Schicht bezeichnet, welche nach der Herstellung der Metallisierung diese nach aussen abschliesst. Kupfer weist eine gute Leitfähigkeit auf, lässt sich durch PVD gut verarbeiten und ist verhältnismässig kostengünstig.

Alternativ gelangen andere leitende Materialien zum Einsatz, z. B. Silber oder Gold.

Bevorzugt weist die Metallisierung eine die Materialplatte unmittelbar kontaktierende Haftschicht auf. Diese weist eine besonders gute Anhaftung an das Material der Materialplatte auf und bildet eine Basis für die nachfolgende Schicht bzw. Schichtenfolge. Bei der Haftschicht handelt es sich insbesondere um eine Metallschicht, bevorzugt aus Titan oder Chrom. Auf diese Schicht kann unmittelbar die Aussenschicht, z. B. aus Kupfer, abgeschieden werden.

Je nach Material der Materialplatte kann sich eine gesonderte Haftschicht erübrigen, d. h. es kann die Aussenschicht (oder eine Schichtenfolge) direkt auf die Materialplatte aufgebracht werden.

Mit Vorteil beträgt die Gesamtdicke der Metallisierung 0.1 - 5 µm. Derartige Dicken lassen sich wirtschaftlich erzeugen und erfüllen ihre Aufgaben als Haftvermittler für das nachfolgende Galvanisieren zuverlässig. In einzelnen Fällen, je nach Material der Materialplatte, deren Oberflächenstruktur und den Dimensionen der Werkstücke kann die Schichtdicke auch ausserhalb des genannten Bereichs gewählt werden.

Vorzugsweise besteht die Trägerschicht aus Kupfer. Dieses Material lässt sich gut galvanisch abscheiden und ist von seinen mechanischen Eigenschaften gut für einen Träger geeignet. Andere Materialien, z. B. Nickel, können ebenfalls zum Einsatz gelangen.

Mit Vorteil beträgt die Dicke der Trägerschicht 0.1 - 0.7 mm, bevorzugt 0.3 - 0.5 mm. Derartige Dicken gewährleisten eine ausreichende Stabilität für die nachfolgende weitere Verarbeitung bei minimalem Materialverbrauch. Die konkret zu wählende Dicke sollte der Dicke und Grösse der Werkstücke sowie den verwendeten Materialien angepasst werden.

Bevorzugt beträgt die Stromdichte bei der galvanischen Abscheidung 0.5 - 2.5 A/dm². Damit lassen sich auf effiziente Weise Trägerschichten mit guten mechanischen Eigenschaften und guter Verbindung mit der mit dem Haftvermittler versehenen Materialplatte erreichen.

Andere Verfahrensparameter sind möglich, insbesondere in Abhängigkeit des abgeschiedenen Materials und des Materials der Metallisierung.

Bei einer bevorzugten Ausführungsform des Verfahrens wird nach dem Aufbringen der Metallisierung und vor der galvanischen Abscheidung der Trägerschicht bereichsweise ein Schutzlack zur Maskierung der Materialplatte aufgebracht. Der Schutzlack verhindert, dass die Materialplatte in den entsprechenden Bereichen galvanisch beschichtet wird. Somit wird wirtschaftliches Galvanisieren durch Eintauchen der gesamten metallisierten und mit Schutzlack versehenen Materialplatte ermöglicht.

Bevorzugt deckt der Schutzlack sowohl die nicht mit der Metallisierung versehene Hauptfläche der Materialplatte als auch die Seitenkanten der Materialplatte ab. Der galvanische Schichtaufbau beschränkt sich somit auf die metallisierte zweite Hauptfläche, die als einzige Aussenfläche der Materialplatte vom Galvanikbad kontaktiert wird. Dadurch werden Spannungen vermieden, welche entstehen können, wenn nebst der zweiten Hauptfläche auch die Seitenkanten mit einer galvanischen Schicht versehen würden.

In einer weiteren Ausführungsvariante werden zu Schutzzwecken beide Hauptflächen metallisiert. Dabei wird die werkstückseitige Hauptfläche mit einer Metallschicht einer Dicke von 10 - 50 µm und anschliessend mit Schutzlack versehen, während auf der trägerseitigen Hauptfläche wie oben beschrieben die Trägerschicht aufgebaut wird. Dadurch können die Kanten der im nachfolgenden Laserverfahren erzeugten Schneidfläche geschützt werden.

Je nach Material der Materialplatte kann sich die Verwendung eines Schutzlacks erübrigen, namentlich dann, wenn sich auf dem Material durch galvanische Verfahren keinerlei Schichten erzeugen lassen.

Mit Vorteil werden die Werkstücke durch Beschichten, Oxidieren und/oder Nitrieren weiter verarbeitet. Insbesondere können die Werkstücke mit einem Pulverlack, mit Teflon oder mit DLC (diamond-like carbon, z. B. Blaktop® der W. Blösch AG, Grenchen, Schweiz) beschichtet werden. Mögliche Beschichtungsverfahren schliessen PVD-, CVD- oder ECD-Beschichtungsverfahren ein. Dadurch können die Werkstücke aus einem zum Beispiel kostengünstigeren, mechanisch stabileren oder einfacher bearbeitbaren Material ausgeschnitten werden und dann durch die Beschichtung veredelt werden. In bevorzugten Ausführungsformen werden die Werkstücke oxidiert und/oder nitriert, gegebenenfalls mittels plasma-unterstützter Verfahren; ein anwendbares Verfahren geht beispielsweise aus dem Europäischen Patent Nr. 2 471 627 der vorliegenden Anmelderin hervor.

Alternativ können die Werkstücke auch anderweitig chemisch oder mechanisch weiterbearbeitet werden. Insbesondere können die Werkstücke geätzt, geschliffen, gebohrt oder gefräst werden.

Nach dem Ausschneiden der Werkstücke sind diese von einem Rahmen umgeben. Den Rahmen bildet ein Teil, insbesondere der zusammenhängende Teil, der bearbeiteten Materialplatte, welcher keine Werkstücke bildet, also das komplementäre Abbild der zu fertigenden Werkstücke oder zumindest ein substanzieller Teil davon. Insbesondere umschliesst der Rahmen das Werkstück respektive die Werkstücke. Das Schneidverfahren wird mit Vorteil so ausgelegt, dass zwischen den Werkstücken und dem umgebenden (oder eingeschlossenen) Rahmen ein für die nachfolgende Bearbeitung ausreichender Abstand geschaffen wird. Die Werkstücke bleiben nach dem Ausschneiden auf dem Träger gehalten und positioniert. Trotzdem sind sie bei ausreichendem Abstand auf mehreren Seiten bearbeitbar - ausser im Bereich von deren Unterseite, welche den Träger kontaktiert. Der Abstand beträgt insbesondere mindestens 0.1 mm, bevorzugt mindestens 0.3 mm. Die Schaffung eines besonderen Abstands erübrigt sich, wenn die Werkstücke nur auf der frei zugänglichen Hauptfläche der Werkstücke beschichtet werden sollen.

Mit Vorteil werden die Werkstücke nach der weiteren Verarbeitung chemisch vom Träger gelöst, indem die Trägerschicht aufgelöst wird. Geeignete Stoffe umfassen z. B. Salpetersäure 30 % (10 - 40 %) für das Auflösen von Kupfer, Kaliumcyanid für das Auflösen von Gold oder Perchlorsäure 60 % für das Auflösen von Chrom.

Zur Unterstützung des Lösevorgangs kann das entsprechende Bad erwärmt bzw. erhitzt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Draufsicht auf ein zahnradförmiges Werkstück;
- Fig. 2: einen Querschnitt durch eine Materialplatte;
- Fig. 3: die Materialplatte mit aufgebrachter Metallisierung;
- Fig. 4: die metallisierte Metallplatte mit einer Abdeckung durch Schutzlack;
- Fig. 5: die Materialplatte mit galvanisch aufgebrachter Trägerschicht;
- Fig. 6: die auf dem Träger befestigte Materialplatte nach Entfernung des Schutzlacks;
- Fig. 7: das Ausschneiden der Werkstücke;
- Fig. 8: eine Aufsicht auf ein Werkstück mit Schneidefläche;
- Fig. 9: eine Aufsicht auf den Träger mit den ausgeschnittenen Werkstücken;
- Fig. 10: einen Querschnitt durch die ausgeschnittenen Werkstücke auf dem Träger;
- Fig. 11: die Werkstücke auf dem Träger mit einer Beschichtung oder einer Oxidations-/Nitrierungsschicht;
- Fig. 12: die beschichteten Werkstücke ohne den Träger;
- Fig. 13: die separierten Werkstücke;
- Fig. 14: eine Variante des Ausschneidens der Werkstücke; und
- Fig. 15: ein Blockschema einer Anlage zur Durchführung des erfindungsgemässen Herstellungsverfahrens.

Grundsätzlich sind in den Figuren gleiche Teile mit gleichen Bezugszeichen versehen. Da es sich um schematische Darstellungen handelt, können keine Grössenverhältnisse aus den Zeichnungen herausgelesen werden. Dies gilt insbesondere für die Schichtdicken, die in der Realität in der Regel deutlich unterschiedlicher sind als in den Figuren schematisch dargestellt.

### Wege zur Ausführung der Erfindung

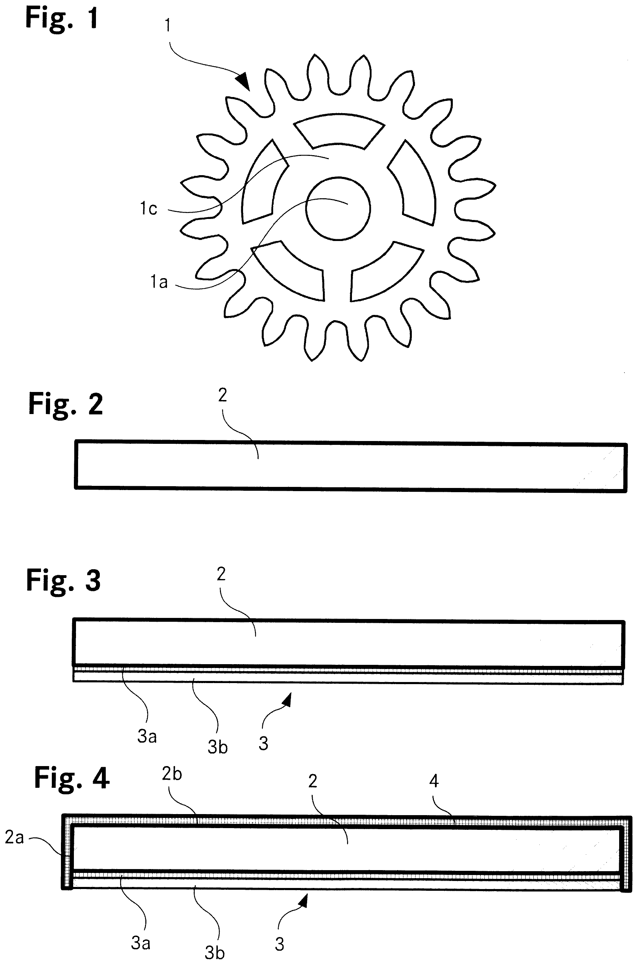

Als Beispiel für eine Anwendung des erfindungsgemässen Verfahrens werden zahnradförmige Werkstücke 1 gemäss Figur 1 aus einer Materialplatte 2 aus Silizium mit einer Dicke von 0.4 mm (siehe Figur 2) ausgeschnitten und anschliessend mit MoS₂ (Molybdändisulfid) beschichtet. Die Werkstücke 1 weisen einen Gesamtdurchmesser von 2.2 mm auf und besitzen im Zentrum eine kreisförmige Aussparung 1a mit einem Durchmesser von 0.4 mm. Solche zahnradförmigen Werkstücke 1 werden zum Beispiel in der Uhrenindustrie eingesetzt.

Die Materialplatte 2 wird zunächst mit einem PVD-Verfahren, insbesondere Sputtern, mit einer dünnen Haftschicht 3a aus Titan versehen. Deren Dicke beträgt nur einige Zehntel µm. Auf die Haftschicht 3a wird dann im Rahmen desselben Beschichtungsprozesses, durch Umschalten auf ein entsprechendes Target, eine Aussenschicht 3b aus Kupfer aufgebracht. Deren Dicke beträgt ca. 0.5 - 3 µm. Zusammen bilden die Haftschicht 3a und die Aussenschicht 3b eine Metallisierung 3 (siehe Figur 3).

Als nächstes werden wie in der Figur 4 gezeigt die Seitenflächen 2a sowie die nicht mit der Metallisierung 3 versehene Hauptfläche 2b mit einem Schutzlack 4 überzogen. Dabei handelt es sich im dargestellten Ausführungsbeispiel um das Produkt 024.579.210 Berlaprint, einen Abdecklack der Berlac AG, Sissach, Schweiz.

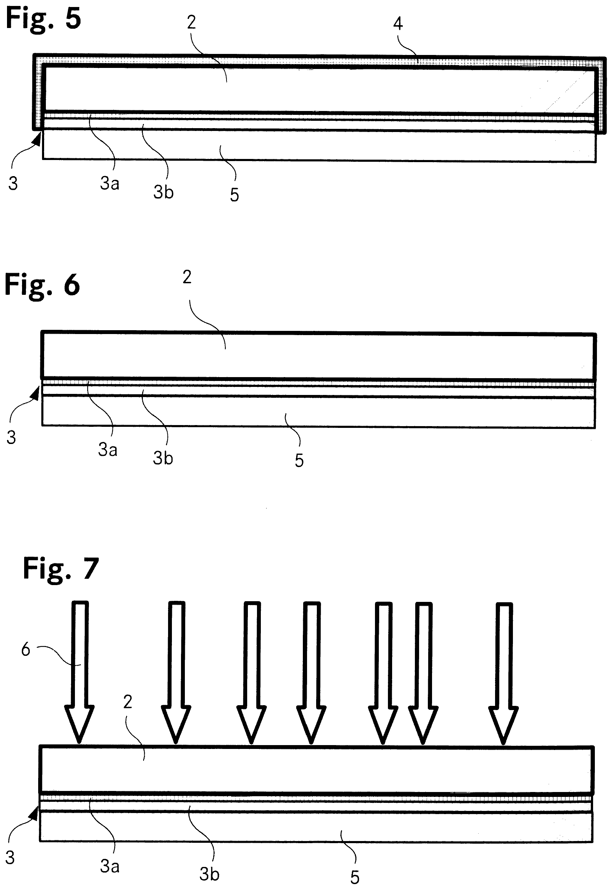

Nun wird galvanisch eine Trägerschicht 5 aus Kupfer auf die Metallisierung 3 abgeschieden. Deren Dicke beträgt am Ende des Beschichtungsvorgangs 0.4 mm. Bei der Abscheidung wird die Stromdichte auf ca. 1.5 A/dm² eingestellt. Es ergibt sich der in der Figur 5 dargestellte Aufbau.

Als nächstes wird der Schutzlack 4 entfernt. Dies erfolgt in an sich bekannter Weise nasschemisch durch eine dem Schutzlack angepasste Zusammensetzung, im vorliegenden Fall beispielsweise das Produkt Resin-Clean ES-3 der Färber & Schmid AG, Dietikon, Schweiz. Der Vorgang kann durch Erwärmen der Zusammensetzung beschleunigt werden. Es ergibt sich der in der Figur 6 dargestellte Aufbau: Die Materialplatte 2 ist mit Hilfe der Metallisierung 3 fest auf dem Träger 5 befestigt.

Nach dem Befestigen erfolgt das Ausschneiden der Werkstücke 1 aus der Materialplatte 2 (Figur 7). Dazu wird der Schneidelaserstrahl 6 eines gepulsten, frequenzverdoppelten Nd:YAG Lasers verwendet, der Licht bei einer Wellenlänge von 532 nm emittiert. Die Pulsdauer des Q-switch Lasers ist circa 15 ns, die Pulsfrequenz beträgt 30 kHz und der Durchmesser des Schneidelaserstrahls 6 beträgt im Fokus circa 20 µm.

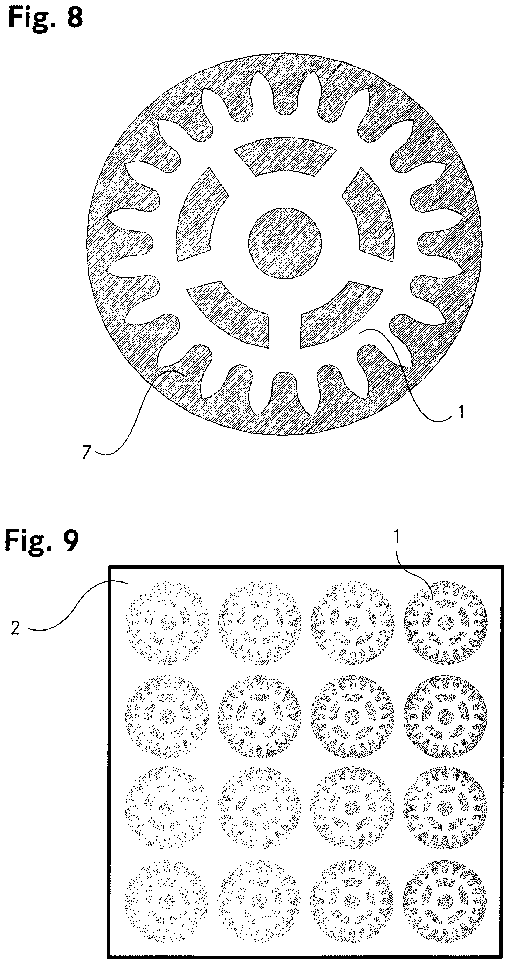

Die Werkstücke 1 werden ausgeschnitten, indem eine Schneidefläche 7 mehrmals mittels des Schneidelaserstrahls 6 Linie für Linie abgetastet wird (Figur 8). Das Abtragen des Siliziums erfolgt dabei in drei Schritten. Zuerst wird der Schneidelaserstrahl 6 bei einer mittleren Leistung von 8.1 W beaufschlagt, wobei 54 Wiederholungen getätigt werden. Im zweiten Schritt beträgt die mittlere Leistung des Schneidelaserstrahls 5 noch 6.5 W bei 9 Wiederholungen. Im dritten Schritt beträgt die mittlere Leistung schliesslich noch 4.9 W bei ebenfalls 9 Wiederholungen. Die Abtast-Geschwindigkeit beträgt bei allen Wiederholungen 0.3 m/s. Der Abstand von Linie zu Linie beträgt 10 µm. Die Figur 9 zeigt eine Draufsicht auf die Materialplatte 2 mit ausgeschnittenen Werkstücken 1. Die Schneidfläche 7 ist derart dimensioniert, dass zwischen dem Werkstück 1 und dem umgebenden Rahmen ein gewisser Mindestabstand eingehalten wird. Dies stellt sicher, dass die Flanken bzw. Seitenflächen der Werkstücke für eine nachträgliche Bearbeitung zugänglich sind.

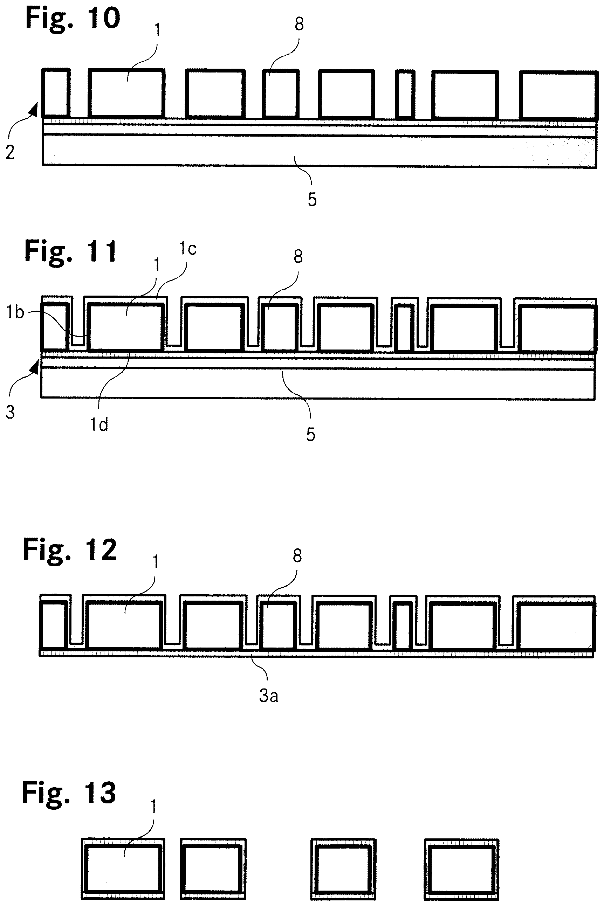

Die Figur 10 zeigt einen Schnitt durch die Trägerschicht 4 und die Materialplatte 2 nach dem Ausschneiden der Werkstücke 1. Wie auch aus den Figuren 8 und 9 deutlich ersichtlich ist, entsteht neben den Werkstücken 1 auch ein diese teilweise umgebender, teilweise von diesen eingeschlossener Rahmen 8. Im dargestellten Ausführungsbeispiel verbleibt dieser Rahmen 8 bis zur Entfernung der Werkstücke 1 mit diesen auf dem Träger 4.

Als nächstes werden die Werkstücke 1 durch Beschichtung bzw. durch Oxidieren oder Nitrieren weiterverarbeitet. Dazu müssen die Werkstücke 1 nun nicht einzeln neu positioniert werden, da die Werkstücke 1 nach wie vor auf der Trägerschicht 5 befestigt sind. Daher werden die Werkstücke 1 zusammen mit dem Träger als Ganzes zum Beschichten weitergeleitet. Dazwischen kann je nach Bedarf ein Reinigungsschritt durchgeführt werden. Die Figur 11 zeigt die beschichteten Werkstücke 1, welche immer noch durch die Metallisierung an der Trägerschicht 4 befestigt sind. Wie aus der Figur ersichtlich ist, wird eine Beschichtung 9 auf einer Seitenfläche 1b und auf einer der Metallisierung 3 und Trägerschicht 5 gegenüberliegenden ersten Hauptfläche 1c der Werkstücke 1 aufgebracht. Es ist zu beachten, dass die Werkstücke 1 an einer zweiten Hauptfläche 1d zur Metallisierung 3 und Trägerschicht 5 hin keine Beschichtung 9 aufweisen. Es gibt Anwendungen, zum Beispiel Zahnräder in der Uhrenindustrie, bei denen vor allem die Beschichtung der Seitenflächen 1b von Bedeutung ist, da vorwiegend diese Seitenflächen 1b mechanisch stark beansprucht werden. Die beiden Hauptflächen 1c und 1d werden dagegen kaum mechanisch beansprucht.

Wie in der Figur 12 gezeigt wird, wird nach dem Beschichten der Werkstücke 1 die Trägerschicht 4 entfernt. Dazu wird das Kupfer mit Hilfe von Salpetersäure 25 % nasschemisch aufgelöst. Dadurch wird sowohl die eigentliche Trägerschicht 4 als auch die Aussenschicht 3b der Metallisierung 3 aufgelöst. Es verbleibt lediglich noch die dünne Haftschicht 3a.

Diese weist in sich keine mechanische Stabilität auf, so dass sich die einzelnen Werkstücke 1 ohne weiteres voneinander separieren lassen. Der Rahmen 8 wird entfernt, so dass die eigentlichen Werkstücke 1 übrig bleiben, vgl. Figur 13.

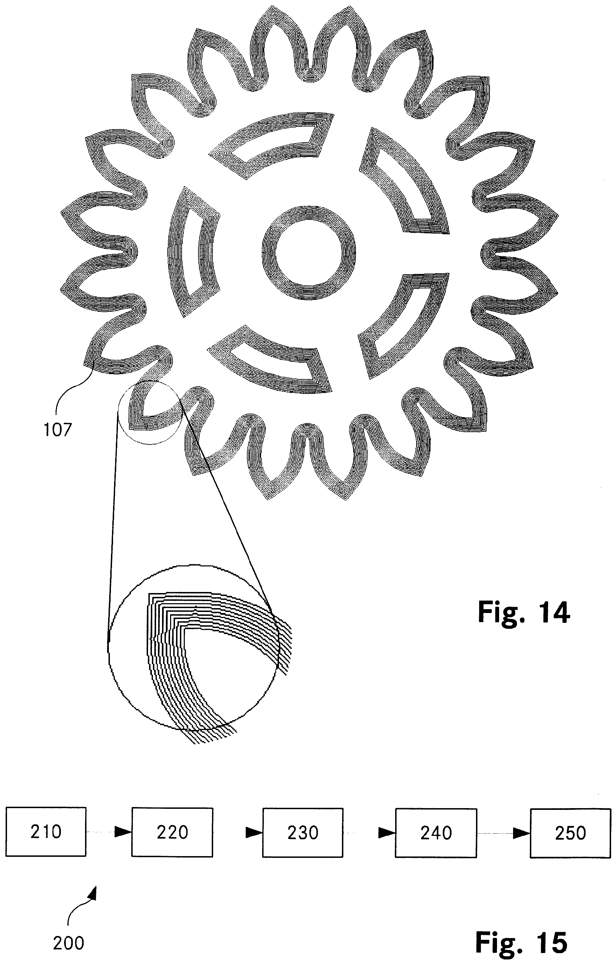

Die Figur 14 zeigt eine Variante des Ausschneidens der Werkstücke. Im Unterschied zu dem im Zusammenhang mit der Figur 8 erwähnten Verfahren werden die Schneideflächen 107 nicht Linie für Linie abgetastet, sondern der Schneidelaserstrahl fährt Bahnen mehrmals ab, die parallel zu allen Konturen der Werkstücke 1 sind, so dass sich eine sichere Trennung der Werkstücke 1 vom umgebenden Rahmen ergibt. Bei einer 0.21 mm dicken Platte soll beispielsweise eine Breite der Schnittkontur von mindestens 100 µm erzeugt werden. Dazu werden 20 um jeweils 5 µm versetzte Bahnen erzeugt, wobei der Laserspot, fokussiert auf die obere Seite der Materialplatte, 20 µm beträgt. Dabei wird mit Einzelpulsen gearbeitet, wobei die Pulsenergie ca. 80 µJ beträgt und das Pulsintervall ca. 4 µs. Die Vorschubgeschwindigkeit beim Abfahren der vordefinierten Bahnen liegt bei 100 mm/s, jede der Bahnen wird 4-8mal wiederholt.

Die Figur 15 zeigt ein Blockschema einer Anlage zur Durchführung des erfindungsgemässen Herstellungsverfahrens. Die Anlage 200 umfasst eine Beschichtungseinheit 210 zum Aufbringen der Metallisierung auf die Materialplatte. In einer nachfolgend angeordneten Galvanikeinheit 220 wird dann eine Trägerschicht auf die Metallisierung abgeschieden. Aus der auf dem Träger befestigten Materialplatte werden sodann in einer Schneideinheit 230 einzelne Werkstücke mit einem Laser ausgeschnitten. Anschliessend erfolgt die Weiterverarbeitung der der auf dem Träger verbliebenen Werkstücke, im vorliegenden Fall in einer Beschichtungsstation 240. Schliesslich werden die Werkstücke durch eine Handhabungseinheit 250 vom Träger entfernt.

Anstelle von Silizium können auch Werkstücke aus anderen Materialen mit dem erfindungsgemässen Verfahren hergestellt werden. In Frage kommen grundsätzlich Materialien, die als Festkörper in gerollter oder flacher Form vorliegen, zum Beispiel Keramiksubstrate oder Metallfolien, insbesondere O- oder N-Keramiken, Saphir oder Diamant.

Anstelle des Q-Switch, frequenzverdoppelten Nd:YAG Lasers können je nach verwendeten Materialien und gewünschten Geometrien auch andere Laser eingesetzt werden. Zum Beispiel kann ein Nd:YAG Laser, welche bei der Grundwellenlänge von 1064 nm Licht emittiert, oder ein CO₂-Laser für das Ausschneiden der Werkstücke verwendet werden. Die oben angegebenen Verfahrensparameter, zum Beispiel hinsichtlich der Anzahl Wiederholungen, der eingesetzten Leistung, des Strahldurchmessers oder der Linienabstände, sind als Beispiele zu verstehen und können in Abhängigkeit des verwendeten Lasers, des zu bearbeitenden Materials oder anderer Umstände variiert werden. Zudem ist es möglich, für das Befestigen und für das Schneiden denselben Laser zu verwenden, wobei die Laserparameter je nach Bedingungen gleich oder unterschiedlich sein können, als auch für das Befestigen und das Schneiden verschiedene Laser einzusetzen.

Die Bearbeitung der Werkstücke, insbesondere das Ausschneiden, kann auch in einer abgeschlossenen Bearbeitungskammer ausgeführt werden. Grundsätzlich sind alle bekannten Verfahren zum Ausschneiden von Werkstücken aus Materialplatten mit der Hilfe von Laser anwendbar. Dazu gehört ebenfalls das Bearbeiten, insbesondere das Schneiden, mit ultrakurzen Laserpulsen, deren Pulslänge sich sowohl im Piko-Sekundenals auch im Femto-Sekunden-Bereich bewegen kann.

Auch wenn 2-dimensionale Werkstücke aus den Materialplatten ausgeschnitten werden, können diese zum Beispiel durch Biegen, Abkanten oder Krümmen danach derart weiterverarbeitet werden, so dass 3-dimensionale Werkstücke gebildet werden.

In den Ausführungsbeispielen wurden mehrere Zahnräder der gleichen Form aus derselben Materialplatte ausgeschnitten. Dies ist in keiner Weise einschränkend zu verstehen. So können grundsätzlich alle Werkstückformen, welche mit einem Laser ausgeschnitten werden können, hergestellt werden. Zudem ist es auch möglich, verschiedene Werkstückformen aus derselben Materialplatte herzustellen.

Neben dem Ausschneiden können noch andere Bearbeitungen der Werkstücke mittels eines Lasers vorgenommen werden. Dies kann insbesondere das Anbringen von Rampen oder Stufen oder das Anfertigen von Strukturen auf einer Oberfläche der Materialplatte, zum Beispiel Vertiefungen oder Beschriftungen, umfassen. Diese Art von Bearbeitungen der Werkstücke mittels eines Lasers kann sowohl vor, während als auch nach dem Schneiden erfolgen.

Zusammenfassend ist festzustellen, dass durch die Erfindung ein Verfahren geschaffen wird, welches die Herstellung und Weiterverarbeitung von Werkstücken aus einer Materialplatte effizienter und einfacher gestaltet.

## Patentansprüche

1. Verfahren zur Herstellung von Werkstücken (1) aus einer Materialplatte (2), welches folgende Schritte umfasst:
a) Befestigen der Materialplatte (2) auf einem Träger (5);
b) Ausschneiden einzelner Werkstücke (1) aus der Materialplatte (2) mit einem Laser (6),
c) Weiterverarbeiten der auf dem Träger (5) verbliebenen Werkstücke (1) und
d) Entfernen der Werkstücke (1) vom Träger (5),
**dadurch gekennzeichnet, dass** zur Befestigung der Materialplatte (2) auf dem Träger (5) folgende Schritte durchgeführt werden:
a1) Aufbringen einer Metallisierung (3) auf die Materialplatte (2); und
a2) galvanische Abscheidung einer den Träger bildenden Trägerschicht (5) auf die Metallisierung (3).

2. Verfahren nach Anspruch 1, **dadurch gekennzeichnet, dass** die Materialplatte (2) aus einer Nitrid- oder Oxidkeramik, Saphir, Silizium oder Diamant besteht.

3. Verfahren nach Anspruch 1 oder 2, **dadurch gekennzeichnet, dass** die Metallisierung (3) mittels physikalischer Gasphasenabscheidung (PVD) auf der Materialplatte (2) erzeugt wird.

4. Verfahren nach einem der Ansprüche 1 bis 3, **dadurch gekennzeichnet, dass** die Metallisierung (3) eine Aussenschicht (3b) aus Kupfer aufweist.

5. Verfahren nach einem der Ansprüche 1 bis 4, **dadurch gekennzeichnet, dass** die Metallisierung (3) eine die Materialplatte unmittelbar kontaktierende Haftschicht (3a) aufweist,

6. Verfahren nach einem der Ansprüche 1 bis 5, **dadurch gekennzeichnet, dass** eine Gesamtdicke der Metallisierung (3) 0.1 - 5 µm beträgt.

7. Verfahren nach einem der Ansprüche 1 bis 6, **dadurch gekennzeichnet, dass** die Trägerschicht (5) aus Kupfer besteht.

8. Verfahren nach einem der Ansprüche 1 bis 7, **dadurch gekennzeichnet, dass** eine Dicke der Trägerschicht (5) 0.1 - 0.7 mm, bevorzugt 0.3 - 0.5 mm, beträgt.

9. Verfahren nach einem der Ansprüche 1 bis 8, **dadurch gekennzeichnet, dass** eine Stromdichte bei der galvanischen Abscheidung 0.5 - 2.5 A/dm² beträgt.

10. Verfahren nach einem der Ansprüche 1 bis 9, **dadurch gekennzeichnet, dass** nach dem Aufbringen der Metallisierung (3) und vor der galvanischen Abscheidung der Trägerschicht (5) bereichsweise ein Schutzlack (4) zur Maskierung der Materialplatte (2) aufgebracht wird.

11. Verfahren nach Anspruch 10, **dadurch gekennzeichnet, dass** der Schutzlack (4) eine nicht mit der Metallisierung (3) versehene Hauptfläche (2b) der Materialplatte (2) und Seitenkanten (2a) der Materialplatte (2) abdeckt.

12. Verfahren nach einem der Ansprüche 1 bis 11, **dadurch gekennzeichnet, dass** die Werkstücke (1) durch Beschichten, Oxidieren und/oder Nitrieren weiter verarbeitet werden.

13. Verfahren nach einem der Ansprüche 1 bis 12, **dadurch gekennzeichnet, dass** das Entfernen der Werkstücke (1) vom Träger (5) chemisch, durch Auflösung der Trägerschicht erfolgt.

## Claims

1. Method for producing workpieces (1) from a material panel (2), which comprises the following steps:
a) fastening the material panel (2) to a carrier (5);
b) cutting individual workpieces (1) out of the material panel (2) with a laser (6);
c) further processing the workpieces (1) remaining on the carrier (5) and
d) removing the workpieces (1) from the carrier (5),
**characterized in that** to fasten the material panel (2) to the carrier (5), the following steps are carried out:
a1) applying a metallization (3) to the material panel (2); and
a2) electrodepositing a carrier layer (5) forming the carrier on the metallization (3).

2. Method according to Claim 1, **characterized in that** the material panel (2) consists of a nitride or oxide ceramic, sapphire, silicon or diamond.

3. Method according to Claim 1 or 2, **characterized in that** that the metallization (3) is produced by means of physical gas phase deposition (PVD) on the material panel (2).

4. Method according to one of Claims 1 to 3, **characterized in that** the metallization (3) has an outer layer (3b) of copper.

5. Method according to one of Claims 1 to 4, **characterized in that** the metallization (3) has an adhesive layer (3a) contacting the material panel directly.

6. Method according to one of Claims 1 to 5, **characterized in that** an overall thickness of the metallization (3) is 0.1 - 5 µm.

7. Method according to one of Claims 1 to 6, **characterized in that** the carrier layer (5) consists of copper.

8. Method according to one of Claims 1 to 7, **characterized in that** the thickness of the carrier layer (5) is 0.1 - 0.7 mm, preferably 0.3 - 0.5 mm.

9. Method according to one of Claims 1 to 8, **characterized in that** a current density during the electrodeposition is 0.5 - 2.5 A/dm².

10. Method according to one of Claims 1 to 9, **characterized in that** after the application of the metallization (3) and before the electrodeposition of the carrier layer (5), a protective lacquer (4) for masking the material panel (2) is applied to some regions.

11. Method according to Claim 10, **characterized in that** the protective lacquer (4) covers a main area (2b) of the material panel (2) that is not provided with the metallization (3) and side edges (2a) of the material panel (2).

12. Method according to one of Claims 1 to 11, **characterized in that** the workpieces (1) are processed further by coating, oxidizing and/or nitriding.

13. Method according to one of Claims 1 to 12, **characterized in that** the removal of the workpieces (1) from the carrier (5) is carried out chemically by dissolving the carrier layer.

## Revendications

1. Procédé de fabrication de pièces (1) à partir d'une plaque de matériau (2), lequel comprend les étapes suivantes :
a) fixation de la plaque de matériau (2) sur un élément porteur (5) ;
b) découpe de pièces (1) individuelles dans la plaque de matériau (2) avec un laser (6),
c) traitement ultérieur des pièces (1) restant sur l'élément porteur (5) et
d) enlèvement des pièces (1) de l'élément porteur (5), **caractérisé en ce que** les étapes suivantes sont exécutées pour la fixation de la plaque de matériau (2) sur l'élément porteur (5) :
a1) application d'une métallisation (3) sur la plaque de matériau (2) ; et
a2) précipitation galvanique d'une couche porteuse (5) formant l'élément porteur sur la métallisation (3).

2. Procédé selon la revendication 1, **caractérisé en ce que** la plaque de matériau (2) se compose d'une céramique nitrurée ou oxydée, de saphir, de silicium ou de diamant.

3. Procédé selon la revendication 1 ou 2, **caractérisé en ce que** la métallisation (3) est générée au moyen d'un dépôt physique en phase vapeur (PVD) sur la plaque de matériau (2).

4. Procédé selon l'une des revendications 1 à 3, **caractérisé en ce que** la métallisation (3) possède une couche externe (3b) en cuivre.

5. Procédé selon l'une des revendications 1 à 4, **caractérisé en ce que** la métallisation (3) possède une couche d'adhérence (3a) en contact direct avec la plaque de matériau.

6. Procédé selon l'une des revendications 1 à 5, **caractérisé en ce qu'**une épaisseur totale de la métallisation (3) est de 0,1 à 5 µm.

7. Procédé selon l'une des revendications 1 à 6, **caractérisé en ce que** la couche porteuse (5) se compose de cuivre.

8. Procédé selon l'une des revendications 1 à 7, **caractérisé en ce qu'**une épaisseur de la couche porteuse (5) est de 0,1 à 0,7 mm, de préférence de 0,3 à 0,5 mm.

9. Procédé selon l'une des revendications 1 à 8, **caractérisé en ce qu'**une densité de courant lors de la précipitation galvanique est de 0,5 à 2,5 A/dm².

10. Procédé selon l'une des revendications 1 à 9, **caractérisé en ce qu'**après l'application de la métallisation (3) et avant la précipitation galvanique de la couche porteuse (5), un vernis protecteur (4) est appliqué dans certaines zones pour masquer la plaque de matériau (2).

11. Procédé selon la revendication 10, **caractérisé en ce que** le vernis protecteur (4) recouvre une surface principale (2b) de la plaque de matériau (2) non pourvue de la métallisation (3) ainsi que des arêtes latérales (2a) de la plaque de matériau (2).

12. Procédé selon l'une des revendications 1 à 11, **caractérisé en ce que** les pièces (1) sont traitées par enduction, oxydation et/ou nitruration.

13. Procédé selon l'une des revendications 1 à 12, **caractérisé en ce que** l'enlèvement des pièces (1) de l'élément porteur (5) est effectué de manière chimique, par dissolution de la couche porteuse.
